# EUROPÄISCHE PATENTSCHRIFT

(11) **EP 2 913 632 B1**
(45) Veröffentlichungstag und Bekanntmachung des Hinweises auf die Patenterteilung: **11.09.2019**
(21) Anmeldenummer: 15151728.1
(22) Anmeldetag: 20.01.2015
(51) Int. Cl.: G01B 15/02, G01N 23/223

(54) **Verfahren zur Messung eines Messobjektes mittels Röntgenfluoreszenz**
Method for measuring an object by means of X-ray fluoresence
Procédé de mesure d'un objet par fluorescence de rayons X

(30) Priorität: 28.02.2014 DE 102014102684
(43) Veröffentlichungstag der Anmeldung: 02.09.2015
(73) Patentinhaber: Helmut Fischer GmbH Institut für Elektronik und Messtechnik., 71069 Sindelfingen (DE)
(72) Erfinder: Rößiger, Volker, verstorben (DE)
(74) Vertreter: Mammel und Maser

(56) Entgegenhaltungen:
- JP-A- 2004 003 959
- US-A- 5 541 973
- US-B2- 7 653 174

## Beschreibung

Die Erfindung betrifft ein Verfahren zur Messung eines Messobjektes mittels Röntgenfluoreszenz, insbesondere zur Messung der Dicke und Elementzusammensetzung dünner Schichten eines Messobjekts.

In vielen Bereichen der industriellen Fertigung kommt es zur Verwendung von zunehmend kleinen Strukturen, wie beispielsweise sogenannten Bond-Pads auf Leiterplatten. Solche kleinen Strukturen weisen oftmals eine Beschichtung auf. In diesen Fällen ist es immer wieder erforderlich, die Beschichtung zu analysieren, insbesondere deren Schichtdicke zu ermitteln.

Zur Bestimmung der Schichtdicke und Analysierung der Beschichtung ist allgemein bekannt, ein Röntgenfluoreszenzverfahren einzusetzen. Dabei wird von einer Strahlungsquelle ein Primärstrahl auf das Messobjekt gerichtet. Eine von der Messoberfläche emittierte Sekundärstrahlung wird von einem Detektor erfasst und an die Auswerteeinrichtung weiter geleitet, um beispielsweise die Schichtdicke zu bestimmen. Dabei wird die Größe des Primärstrahls an die Strukturgröße des Messobjektes angepasst, wobei die Messung von kleinen Strukturen dann ihre Grenze findet, wenn der anregende Primärstrahl in seiner lateralen Ausdehnung größer als die ebene Oberfläche des Messobjektes ist. Dies heißt, dass je kleiner das Messeobjekt ist, umso kleiner muss auch der Messfleck des Primärstrahls sein. Dies könnte durch eine Ausblendung des anregenden Strahlenbündels des Primärstrahls erfolgen, wodurch jedoch eine Verringerung der Intensität und dadurch eine Beeinträchtigung in der Erfassung des Spektrums der Sekundärstrahlung einhergehen. Dadurch gibt es für diese konventionelle Technik Grenzen.

Deshalb ist bekannt, zwischen einer Strahlungsquelle und dem Messobjekt eine Polykapillaroptik, insbesondere Polykapillarlinse, vorzusehen, durch welche sich die Intensität in einem kleinen Messfleck erhöhen lässt. Dies hat jedoch den Nachteil, dass die räumliche Verteilung der Strahlungsintensität unscharf wird. Deshalb können bislang kleine Strukturen mit einem Messfleck von nur bis zu ca. 60 µm erfassbar sein. Zudem sind solche Polykapillare sehr teuer.

Kleinere Messflecke zur Messung von Strukturen mit einer Messfläche von kleiner circa 60 µm können nur mit Hilfe von sogenannten Monokapillaren erzeugt werden. Jedoch ist hier die erreichbare Intensität so gering, dass diese für die technische Anwendung nicht in Frage kommen.

Aus der US 7,653,174 B2 ist ein Verfahren zur Untersuchung von feinen Strukturen auf Substraten mittels Röntgenfluoreszenz bekannt. Dabei werden entlang einer Geraden mehrere Messflecke übereinanderlappend aneinander gereiht, und eine daraus resultierende Sekundärstrahlung ausgewertet.

Aus der US 5,541,973 A ist des Weiteren ein Analyseverfahren für kleine Strukturen mit Röntgenfluoreszenzstrahlung bekannt. Dabei werden durch den Primärstrahl mehrere überlappende Messfleckbereiche benachbart und überlappend um den analysierenden Bereich herum positioniert, und in einem zweiten Schritt werden alle Messflecke so angeordnet, dass der zu analysierende Bereich in einem gemeinsamen Überdeckungsbereich liegt, um dann eine Differenz zwischen der ersten und zweiten Messung zu bilden.

Aus der JP 2004 003959 A ist ein Messverfahren mittels Röntgenfluoreszenzstrahlung bekannt, bei welchem eine Messfläche abgefragt wird, die größer als die zu messende Struktur ist und daraufhin Mittelwerte der erfassten Sekundärstrahlung gebildet werden.

Der Erfindung liegt deshalb die Aufgabe zugrunde, ein Verfahren zur Messung von Messobjekten mit einer kleineren Ausdehnung, insbesondere kostengünstig, zu ermöglichen.

Diese Aufgabe wird erfindungsgemäß durch ein Verfahren nach Anspruch 1 mittels Röntgenfluoreszenz gelöst, bei welchem eine Größe der Messfläche des Messobjektes erfasst wird, daraufhin die Größe der Messfläche des Messobjektes mit einer Größe eines Messflecks des auf dem Messobjekt auftreffenden Primärstrahls verglichen wird und bei der Ermittlung einer Messfläche, die kleiner als der Messfleck ist, eine Größe der Rasterfläche ausgewählt wird, die die Messfläche des Messobjektes zumindest überdeckt, wobei aus dem Verhältnis der Rasterfläche zur Fläche des Messobjektes ein Skalierungsfaktor α ermittelt wird, welcher mit den erfassten Spektren der Einzelmessungen von den jeweiligen Rasterteilflächen nach dem Aufsummieren und deren Mittelwertbildung multipliziert sowie anschließend das mit dem Skalierungsfaktor α korrigierte Spektrum zur quantitativen Auswertung bereitgestellt wird. Durch dieses Verfahren ist es möglich, Messflächen des Messobjektes zu messen, deren Messfläche kleiner als der Messfleck des auf die Messfläche auftreffenden Primärstrahls ist. Durch die Ermittlung eines Spektrums der Sekundärstrahlung von jeder Rasterteilfläche innerhalb einer Rasterfläche sowie der Aufsummierung und Mittelwertbildung der Spektren und der anschließenden Korrektur mit dem Skalierungsfaktor α ist möglich, dass die Begrenzung und/oder die Ortsauflösungseigenschaften der Röntgenoptik nicht genau bekannt sein müssen und dennoch zuverlässige Messergebnisse ermöglicht sind.

Dadurch kann auch eine Erfassung einer Messfläche des Messgegenstandes, die nur teilweise innerhalb einer Rasterteilfläche liegt, in die Auswertung einfließen, so dass aufgrund der Verhältnisbildung der Größe zur Rasterfläche und der Größe der Messfläche ein Skalierungsfaktor α als Korrekturfaktor dient, um die einzelnen ermittelten Spektren der Sekundärstrahlung innerhalb den Rasterteilflächen der Rasterfläche auszuwerten.

Bevorzugt wird der Abstand der Rasterteilfläche durch die Größe des Messflecks des Primärstrahls bestimmt, der auf dem Messobjekt auftrifft. Dadurch bedarf es keiner zusätzlichen Einstellung oder Veränderung einer Optik. Vielmehr ist die Größe des Messflecks bei Röntgenfluoreszenzmessgeräten gerätespezifisch festgelegt, so dass dadurch eine geräteseitig gesicherte Größe gegeben ist, welche für das Verfahren verwendet wird.

Des Weiteren wird bevorzugt die Größe der Rasterfläche aus einem ganzzahligen Vielfachen von unmittelbar aneinander oder überlappend gereihten Messflecken des Primärstrahls gebildet. Es kann eine Rasterfläche mit nur einer Zeile oder einer Spalte aus mehreren nebeneinander oder aneinander gereihten Messflecken gebildet werden. Es kann auch eine Matrix sowohl aus einer gleichen als auch einer unterschiedlichen Anzahl von Zeilen und Spalten mit beliebig aneinander gereihten Messflecken vorgesehen sein. Diese Rasterfläche kann an die Messaufgabe beziehungsweise an die Kontur der Messfläche des Messgegenstandes angepasst werden. Jedenfalls ist jede Rasterteilfläche von einem Messfleck zumindest ausgefüllt.

Die korrigierten Spektren der Sekundärstrahlung aus den Einzelmessungen der Rasterteilflächen werden bevorzugt mittels einer Auswertesoftware ausgewertet, so dass daraus eine Elementenkonzentration oder Schichtdicke der Beschichtung oder einer Schicht auf einem Grundwerkstoff ermittelt und ausgegeben wird. Dadurch kann eine einfache Überprüfung erfolgen, ob eine Beschichtung auf einem Grundstoff hinreichend bezüglich der Schichtdicke und/oder hinreichend bezüglich den einzelnen Elementenkonzentrationen ist.

Eine weitere vorteilhafte Ausgestaltung des Verfahrens sieht vor, dass eine Verfahrstrecke von Rasterteilfläche zu Rasterteilfläche innerhalb einer Zeile oder einer Spalte oder von einer Zeile oder Spalte in die nächste Spalte oder Zeile innerhalb der Rasterfläche durch die Größe des Messflecks des Primärstrahls der Strahlungsquelle bestimmt wird. Der Messfleck des Primärstrahls wird durch einen sogenannten Primärspot auf einer Anode der Röntgenröhre festgelegt. Durch die Verfahrstrecke von Rasterteilfläche zu Rasterteilfläche kann die Rasterfläche vollständig bezüglich der gesamten Fläche erfasst werden, so dass auch Übergänge bezüglich dem Vorhandensein und Nichtvorhandensein von zu messenden Schichten erfasst werden können.

Des Weiteren wird bevorzugt die Größe der Messfläche des Messobjektes durch ein optisches Messverfahren ermittelt. Dadurch kann in einfacher Weise eine exakte Bestimmung ermöglicht werden, um diese Größe der Messfläche für die Bestimmung des Skalierungsfaktors zugrunde zu legen.

Vorteilhafterweise wird die Größe der Rasterfläche größer als die ermittelte Messfläche des Messobjektes bestimmt, wobei die Rasterfläche die ermittelte Messfläche zumindest teilweise von einem Rand zumindest abschnittsweise umgibt. Dieser Rand dient dazu, dass zumindest ein Übergang von einem nicht zu erfassenden Bereich und der Messfläche des Messobjektes gegeben ist, um eine Intensitätsänderung zu erfassen und zu berücksichtigen.

Der die Messfläche des Messobjektes zumindest teilweise umgebende Rand weist eine Breite von wenigstens einer Größe einer Rasterteilfläche auf. Bei einer rechteckigen oder quadratischen Messfläche ist die Rasterfläche wenigstens um zwei Rasterteilflächen größer als die Messfläche, so dass an jeder Seitenkante ein Rand gebildet ist. Vorteilhafterweise weist eine Rasterteilfläche die Größe einer sogenannten Halbwertbreite (FWHM) auf, die für jedes Röntgenfluoreszenzgerät spezifisch sind.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine schematische Ansicht einer Vorrichtung zur Durchführung einer Röntgenfluoreszenzanalyse,
Figur 2 eine schematisch vergrößerte Ansicht einer Messfläche eines Messobjektes mit einer dazugehörigen Rasterfläche,
Figuren 3a bis 3d schematische Ansichten zur Bestimmung einer Größe einer Rasterfläche für unterschiedliche Geometrien der Messfläche,
Figuren 4 bis 8 Diagramme bezüglich Messwerten und einer daraus erfolgten quantitativen Auswertung und
Figur 9 eine schematisch vergrößerte Ansicht einer Messfläche eines weiteren Messobjektes mit einer dazu angeordneten Rasterfläche.

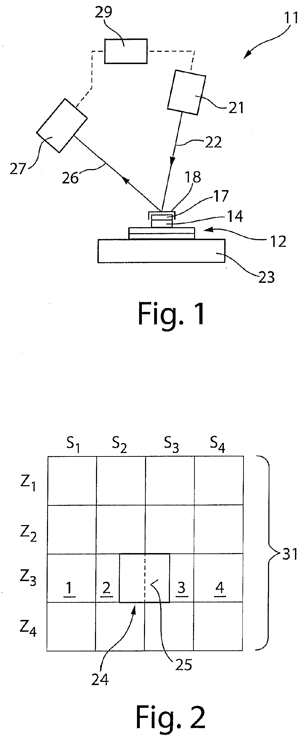

In Figur 1 ist schematisch eine Vorrichtung 11 zur Durchführung einer Röntgenfluoreszenzanalyse mit einem Probenkörper 12 dargestellt. Hierbei kann es sich beispielsweise um eine Leiterplatte mit Bondpads handeln. Beispielsweise kann der Bondpad aus einem schmalen Kupfersteg 14 auf einer Leiterplatte bestehen. Auf dem Kupfersteg 14 ist eine Nickelschicht 17 aufgebracht, welche zur Vermeidung von Korrosion mit einer Goldschicht 18 überzogen ist. Zumindest die Goldschicht 18 und zumeist auch die Nickelschicht 17 sind bei einem solchen Ausführungsbeispiel bezüglich der Schichtdicke und der Elementenkonzentrationen zu messen und zu prüfen.

Diese Vorrichtung 11 umfasst eine Röntgenstrahlungsquelle 21 beziehungsweise eine Röntgenröhre, über die eine Primärstrahlung 22 ausgegeben und auf den Probenkörper 12 gerichtet ist, der beispielsweise von einem Probenträger 23 aufgenommen sein kann. Der Probenträger 23 kann in der Lage und/oder in der Höhe, vorzugsweise mittels eines verfahrbaren Tisches, der insbesondere motorisch angetrieben ist, einstellbar sein. Der Primärstrahl 22 kann beispielsweise über einen nicht näher dargestellten Kollimator fokussiert werden. Der Primärstrahl 22 wird beispielsweise senkrecht oder in einem davon abweichenden Winkel zur Oberfläche des Probenkörpers 12 auf ein Messobjekt 24 des Probenkörpers 12 gerichtet. Dabei wird eine Röntgenfluoreszenzstrahlung in der Oberfläche des Probenkörpers 12 angeregt, welche als Sekundärstrahlung 26 aus dem Probenkörper 12 emittiert und von einem, vorzugsweise energiedispersiven, Detektor 27 erfasst wird. Eine Auswertung der erfassten Messergebnisse aus dem Detektor 27 erfolgt über eine Auswerteeinrichtung 29, welche die erfassten Signale des Detektors 27 auswertet und ausgibt.

In Figur 2 ist eine schematische Ansicht von oben auf ein Messobjekt 24 mit einer Messfläche 25 dargestellt. Die Größe eines solchen Messobjektes 24 kann beispielsweise eine Länge und/oder Breite von 60 µm oder 50 µm oder weniger umfassen.

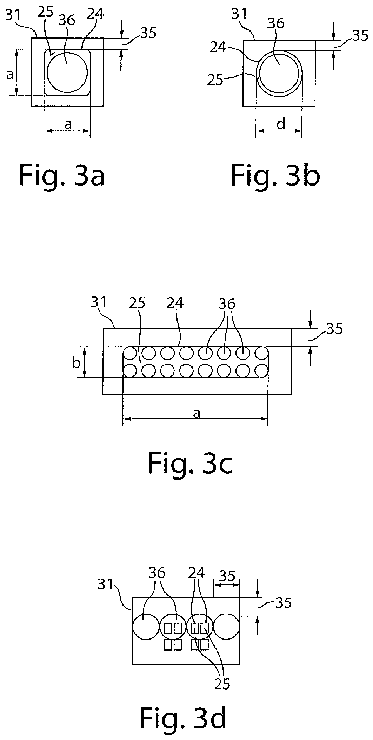

Zur Durchführung einer Messung von einer solchen kleinen Messfläche 25 des Messobjektes 24 wird eine Rasterfläche 31 aus mehreren Rasterteilflächen 1, 2, 3, 4 ... n bestimmt, die in Zeilen Z1 ... Zn und/oder Spalten S1 ... Sn angeordnet sind. Zur Festlegung der Größe der Rasterfläche 31 erfolgt zunächst eine optische Erfassung der Messfläche 25 des Messobjektes 24. Beispielsweise kann eine optische Messeinrichtung, insbesondere ein Mikroskop oder ein Rasterelektronenmikroskop, eingesetzt werden. Anschließend wird die Rasterfläche 31 bestimmt. Die optisch ermittelte Größe der Messfläche 25 des Messobjektes 24 wird mit einer Größe eines Messfleckes 36 des Primärstrahls 22 verglichen, der auf die Messfläche 25 des Messobjektes 24 auftritt. Die Größe des Messfleckes 36 wird üblicherweise als Halbwertbreite (FWHM) angegeben. Diese Größe ist gerätespezifisch und wird durch den Primärspot, die Strahloptik und die Geometrie, in der der Strahlungsquelle zugeordneten Anode, bestimmt. Sofern die Größe der Messfläche 25 kleiner ist als die des Messflecks 36, wird eine Rasterfläche 31 bestimmt, die größer als die Messfläche 25 ist und vorteilhafterweise einen Rand 35 aufweist, der in den nachfolgenden Figuren 3a bis 3c für unterschiedliche Geometrien der Messfläche 25 dargestellt ist.

Beispielsweise ist gemäß der Figur 3a bei einer quadratischen Messfläche 25 mit einer Kantenlänge a ein gleichmäßig umlaufender Rand 35 vorgesehen, so dass die Rasterfläche 31 bezüglich seiner Seitenkante sich aus der Kantenlänge a der Messfläche 25 und zweimal des Randes 35 zusammensetzt. Bei einer beispielsweise kreisrunden Messfläche 25 gemäß Figur 3b gilt dies analog, wobei anstelle der Kantenlänge a der Durchmesser d zugrundegelegt wird, um die Größe der Rasterfläche 31 zu bestimmen. In Figur 3c ist beispielsweise eine rechteckförmige Messfläche 25 dargestellt, bei welcher die Länge der Seitenkante a von der Länge der Seitenkante b deutlich abweicht. Der umlaufende Rand 35 wird jedoch in Analogie zu Figur 3a gebildet, um die Rasterfläche 31 zu bestimmen. In Figur 3d ist, wie beansprucht, das Messobjekt 24 mit seiner lateralen Ausdehnung der Messfläche 25 kleiner als der Messfleck 36. Darüber hinaus sind die Abstände der Messobjekte 24 kleiner als die Größe des Messflecks 36. In einem solchen Fall werden mehrere Messobjekte 24 zur Bildung einer Gesamtmessfläche zusammen gefasst und ergänzend der umlaufende Rand 35 in Analogie zu Figur 3a gebildet, um die Rasterfläche 31 zu bestimmen.

Die Breite des Randes 35 ist vorteilhafterweise derart ausgelegt, dass dieser die Größe von wenigstens einem Messfleck 36 umfasst. Alternativ kann der Rand 35 auch breiter sein. Ausgehend von der ermittelten Größe der Messfläche 25 und dem zweifachen Wert eines Messflecks 36 für den rechten und linken Rand 35 wird darauf die Anzahl der einzelnen Rasterteilflächen innerhalb zumindest einer Zeile Z1 bis Zn und/oder zumindest einer Spalte S1 bis Sn bestimmt, wobei die Anzahl der Rasterteilflächen sich aus einem ganzzahligen Vielfachen aus der Größe des Messflecks 36 ergibt, wie dies beispielsweise in Figur 2 dargestellt ist. Der Abstand der Rasterteilflächen entspricht dabei der Größe des Messflecks 36, so dass eine vollflächige Abtastung der Rasterflächen 31 mit dem Primärstrahl 22 zur Erfassung der Spektren der Sekundärstrahlung 26 aus den Einzelmessungen möglich ist.

Darauffolgend werden Einzelmessungen an den Rasterteilflächen 1 ... n durchgeführt. Anhand eines vereinfachten Beispiels, bei dem nur die Zeile Z3 und nicht die gesamte Rasterfläche 31 betrachtet wird, soll dies erörtert werden.

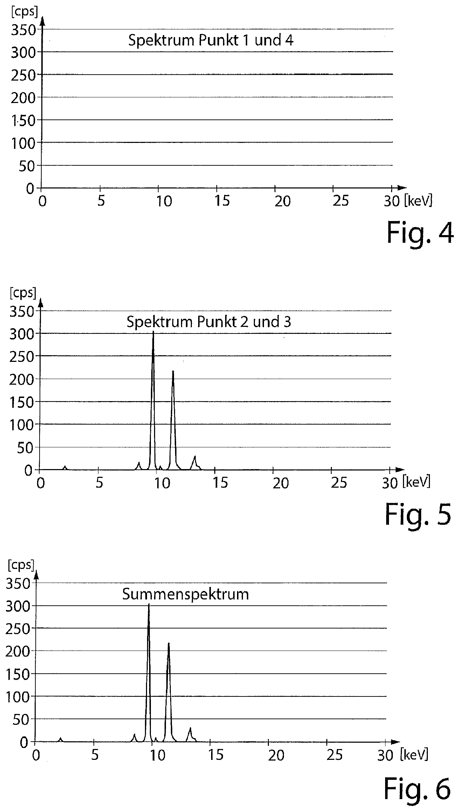

Zunächst wird der Primärstrahl 22 auf die Rasterteilfläche 1 gerichtet, der sich in der Position Z3/S1 der Rasterfläche 31 befindet. Anschließend wird das Messobjekt 24 um eine Spaltbreite nach links verfahren, so dass der Primärstrahl 22 auf die Rasterteilfläche 2 tritt. Dies wird wiederholt, bis die Rasterteilflächen 3 und 4 bestrahlt wurden, so dass mittels des Detektors 27 das jeweilige Spektrum erfasst wird. Daraus ergibt sich beispielsweise für die Rasterteilflächen 1 und 4 das in Figur 4 dargestellte Spektrum. Da bei den Rasterteilflächen 1 und 4 eine Messfläche 25 des Messobjekts 24 nicht enthalten war, erfolgt diesbezüglich keine Erfassung von Messwerten und somit keine Ausgabe von Signalen.

In Figur 5 ist das Spektrum der Rasterteilflächen 2 und 3 dargestellt. Da die Rasterteilflächen 2 und 3 jeweils einen Teil der Messfläche 25 des Messobjektes 24 überdecken, wird das dadurch ermittelte Spektrum entsprechend erfasst.

Diese beispielhafte Erfassung der Spektren in den Rasterteilflächen 1 bis 4 in Zeile 3 wird für alle Rasterteilflächen innerhalb der Rasterfläche 31 durchgeführt. Anstelle einer zeilenweisen Erfassung der Spektren kann auch eine spaltenweise Erfassung der Spektren der Sekundärstrahlung 26 in den einzelnen Rasterteilflächen der Rasterfläche 31 erfolgen.

Daraufhin werden die erfassten Spektren in den jeweiligen Rasterteilflächen der Rasterfläche 31 ausgewertet. Zunächst wird ein Summenspektrum gebildet, welches im Beispiel aus den Rasterteilflächen 1 bis 4 in Figur 6 besteht und dargestellt ist. Dies entspricht in diesem Fall der Figur 5, da in den Rasterteilflächen 1 und 4 kein Spektrum ermittelt wurde. Würde abweichend vom Beispielfall die gesamte Rasterfläche berücksichtigt werden, ergäbe sich aus den Punkten Z3/S2 und Z3/S3 ebenfalls ein Spektrum, das aufsummiert würde.

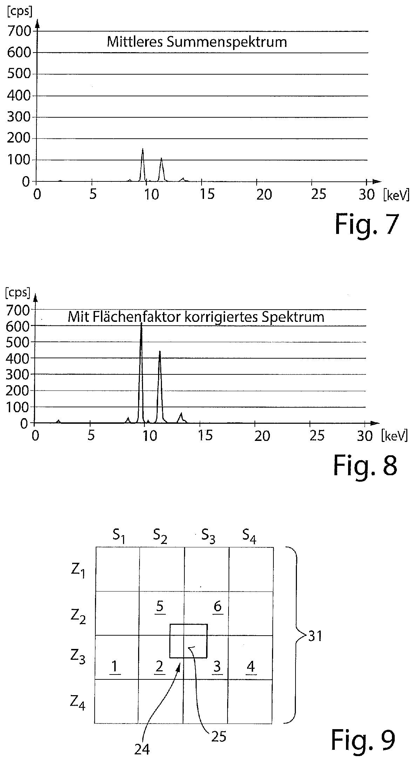

Anschließend wird ein Mittelwert über das gesamte Spektrum der einzelnen Rasterteilflächen 1 gebildet, welches als mittleres Summenspektrum in Figur 7 für die Rasterteilflächen 1 bis 4 dargestellt ist. Darauf folgend wird dieses mittlere Summenspektrum korrigiert, indem dieses mit dem Skalierungsfaktor α multipliziert wird. Dieser Skalierungsfaktor α ergibt sich aus dem Verhältnis der Größe der Rasterfläche 31 zur Größe der Messfläche 25. Anschließend wird dieses mit dem Skalierungsfaktor α korrigierte Spektrum zur quantitativen Auswertung in der Auswerteeinrichtung 29 bereit gestellt, so dass diese ermittelten Werte beispielsweise in ein Schichtdickenverteilungsprofil übertragen oder in Schichtdickenschnittprofile ausgegeben werden können, aus denen die Schichtdicken und/oder Elementkonzentrationen auslesbar beziehungsweise darstellbar sind.

Während der Ermittlung der Spektren an den Rasterteilflächen 1 bis 4 wird die Messfläche 25 des Messobjektes 24 um den Betrag des Messfleckes 36 beziehungsweise der Rasterteilfläche motorisch verfahren, so dass eine unmittelbare Aneinanderreihung der einzelnen Messflecke 36 ermöglicht ist. Hierfür ist bevorzugt ein Positioniertisch vorgesehen, welcher eine solche Auflösung für die einzelnen Verfahrschritte aufweist, die der Größe des Messflecks 36 entspricht.

Bei der Ausführungsform gemäß Figur 3d gilt das vorgenannte Verfahren, wobei dieses dahingehend abgewandelt wird, dass zwei oder mehrere Messobjekte 24 zu einer Gesamtmessfläche zusammengefasst werden, um darauf folgend Einzelmessungen an den Rasterteilflächen durchzuführen. Als Ergebnis kann dabei keine Aussage über die ermittelte Schichtdicke oder Elementkonzentration der einzelnen Messobjekte 24 erfolgen, sondern vielmehr eine Gesamtbetrachtung der Messobjekte 24, aus welcher ein Mittelwert der Schichtdicke oder der Elementkonzentration für das jeweilige Messobjekt 24 abgeleitet wird.

In Figur 9 ist ein Praxisbeispiel dargestellt, wie dies zumeist auftritt und von Figur 2 bezüglich der Positionierung der Rasterteilflächen zur lateralen Ausdehnung des Messobjektes 24 abweicht. Bei der Durchführung der Einzelmessungen werden beispielsweise die in den Rasterteilflächen 2, 3, 5 und 6 ermittelten Spektren zusammengefasst und anschließend in Analogie zum vorbeschriebenen Verfahren ausgewertet.

## Patentansprüche

1. Verfahren zur Messung eines Messobjektes (24) mittels Röntgenfluoreszenz, insbesondere zur Messung der Dicke dünner Schichten oder Bestimmung einer Elementkonzentration eines Messobjekts (24),
- bei welchem ein Primärstrahl (22) von einer Röntgenstrahlungsquelle (21) auf das Messobjekt (24) gerichtet wird,
- bei dem eine von dem Messobjekt (24) emittierte Sekundärstrahlung (26) von einem Detektor (27) erfasst und an eine Auswerteeinrichtung (29) weitergeleitet wird,
- bei dem der Primärstrahl (22) innerhalb einer Rasterfläche (31) verfahren wird, wobei die Rasterfläche (31) in Rasterteilflächen (1 ... n) unterteilt sowie in zumindest eine Zeile (Z₁ ... Zₙ) und zumindest eine Spalte (S₁ ... Sₙ) untergliedert wird, und auf jede Rasterteilfläche (1 ... n) ein Primärstrahl (22) gerichtet wird, wobei ein Messfleck (36) des Primärstrahls (22) mindestens die Rasterteilfläche (1 ... n) ausfüllt,
**dadurch gekennzeichnet,**
- **dass** eine laterale Ausdehnung der Messfläche (25) des Messobjektes (24) erfasst wird,
- **dass** die laterale Ausdehnung der Messfläche (25) des Messobjekts (24) mit der Größe des Messflecks (36) des auf dem Messobjekt (24) auftreffenden Primärstrahls (22) verglichen wird,
- **dass** bei der Ermittlung der Größe der Messfläche (25) des Messobjektes (24), die kleiner als der Messfleck (36) ist, eine Größe der Rasterfläche (31) ausgewählt wird, die zumindest die Messfläche (25) des Messobjektes (24) überdeckt,
- **dass** aus einem Verhältnis der Größe der Rasterfläche (31) zur Größe der Messfläche (25) des Messobjektes (24) ein Skalierungsfaktor α ermittelt wird,
- **dass** das erfasste Spektrum der Sekundärstrahlung (26) von den jeweiligen Rasterteilflächen (1 ... n) der Rasterfläche (31) aufsummiert, gemittelt und anschließend mit dem Skalierungsfaktor α multipliziert wird und
- **dass** das mit dem Skalierungsfaktor α korrigierte Spektrum der Sekundärstrahlung (26) von den Rasterteilflächen (1 ... n) zur quantitativen Auswertung bereitgestellt wird.

2. Verfahren nach Anspruch 1, **dadurch gekennzeichnet, dass** die Größe der Rasterteilflächen (1 ... n) durch die Größe des Messflecks (36) des Primärstrahls (22) bestimmt wird.

3. Verfahren nach Anspruch 1, **dadurch gekennzeichnet, dass** die Größe der Rasterfläche (31) aus einem ganzzahligen Vielfachen von unmittelbar aneinander oder überlappend gereihten Messflecken (36) des Primärstrahls (22) gebildet wird.

4. Verfahren nach Anspruch 1, **dadurch gekennzeichnet, dass** mittels einer Auswertesoftware aus dem Spektrum der Einzelmessungen an den Rasterteilflächen (1 ... n) Elementenkonzentrationen oder Schichtdicken des Messobjekts (24) ermittelt und ausgegeben werden.

5. Verfahren nach Anspruch 1, **dadurch gekennzeichnet, dass** eine Verfahrstrecke des Messobjekts (24) relativ zum auftreffenden Primärstrahl (22) von der einen Rasterteilfläche (2 ... n+1) zu der benachbarten Rasterteilfläche innerhalb einer Zeile oder einer Spalte der Rasterfläche (31) durch die Größe des Messflecks (36) eines Primärstrahls (22) der Strahlungsquelle (21) bestimmt wird.

6. Verfahren nach Anspruch 1, **dadurch gekennzeichnet, dass** eine Größe der Messfläche (25) des Messobjektes (24) durch ein optisches Messverfahren ermittelt wird.

7. Verfahren nach Anspruch 6, **dadurch gekennzeichnet, dass** die Größe der Rasterfläche (31) größer als die ermittelte Messfläche (25) des Messobjektes (24) ausgelegt und derart größer bestimmt wird, dass die Rasterfläche (31) die ermittelte Messfläche (25) und einen diese zumindest teilweise umgebenden Rand (35) umfasst.

8. Verfahren nach Anspruch 7, **dadurch gekennzeichnet, dass** der die Messfläche (25) des Messobjektes (24) umgebende Rand (35) auf eine Breite von wenigstens einer Größe der Rasterteilfläche (1 ... n) bestimmt wird.

9. Verfahren nach einem der vorhergehenden Ansprüche, **dadurch gekennzeichnet, dass** bei einem Abstand zwischen zwei Messobjekten (24), der kleiner ist als die Größe des Messflecks (36), zwei oder mehrere Messobjekte (24) zu einer Gesamtmessfläche zusammengefasst werden und für die Gesamtmessfläche eine Rasterfläche (31) ermittelt wird und daraus eine mittlere Dicke der dünnen Schichten oder eine mittlere Elementkonzentration für das einzelne in der Gesamtmessfläche zusammengefasste Messobjekt (24) abgeleitet wird.

## Claims

1. A method for measuring a test object (24) by means of X-ray fluorescence, in particular for measuring the thickness of thin layers or for determining an element concentration of a test object (24),
- in which a primary beam (22) is directed from an X-ray source (21) onto the test object (24),
- in which a secondary radiation (26) emitted from the test object (24) is detected by a detector (27) and forwarded to an evaluation device (29),
- in which the primary beam (22) is displaced within a grid surface (31), said grid surface (31) being divided into grid partial surfaces (1 ... n) and being subdivided into at least one line (Z1 ... Zn) and at least one column (S1 ... Sn) and a primary beam (22) being directed onto each grid partial surface (1 ... n), a measuring spot (36) of the primary beam (22) filling at least the grid partial surface (1 ... n),
**characterised in that**
- a lateral expansion of the measurement surface (25) of the test object (24) is detected,
- the lateral expansion of the measurement surface (25) of the test object (24) is compared to the size of the measuring spot (36) of the primary beam (22) impinging on the test object (24),
- upon determining a size of the measurement surface (25) of the test object (24) which is smaller than the measuring spot (36), a size of the grid surface (31) is selected such as to cover at least the measurement surface (25) of the test object (24),
- a scaling factor α is determined from a ratio of the size of the grid surface (31) with respect to the size of the measurement surface (25) of the test object (24),
- the detected spectrum of the secondary radiation (26) is added up from the respective grid partial surfaces (1 ... n) so as to form the grid surface (31), then averaged, and subsequently multiplied by the scaling factor α and
- the spectrum of the secondary radiation (26) from the grid partial surfaces (1 ... n) that is corrected with the scaling factor α is provided as a basis for quantitative evaluation.

2. The method as claimed in claim 1, **characterised in that** the size of the grid partial surfaces (1 ... n) is determined by the size of the measuring spot (36) of the primary beam (22).

3. The method as claimed in claim 1, **characterised in that** the size of the grid surface (31) is formed from an integer multiple of measuring spots (36) of the primary beam (22) which are lined up directly next to one another or in a manner so as to form an overlap.

4. The method as claimed in claim 1, **characterised in that**, by means of evaluation software, element concentrations or layer thicknesses of the test object (24) are determined and output, based on the spectrum of the individual measurements at the grid partial surfaces (1 ... n).

5. The method as claimed in claim 1, **characterised in that** a travel distance of the test object (24) relative to the impinging primary beam (22) from any one grid partial surface (2 ... n + 1) to the adjacent grid partial surface within a line or a column of the grid surface (31) is determined by the size of the measuring spot (36) of a primary beam (22) of the radiation source (21).

6. The method as claimed in claim 1, **characterised in that** a size of the measurement surface (25) of the test object (24) is determined by an optical measurement method.

7. The method as claimed in claim 6, **characterised in that** the size of the grid surface (31) is designed to be larger than the determined measurement surface (25) of the test object (24) and is determined to be larger to such an extent that the grid surface (31) comprises the determined measurement surface (25) and an edge (35) by which said measurement surface is at least partially surrounded.

8. The method as claimed in claim 7, **characterised in that** the edge (35) surrounding the measurement surface (25) of the test object (24) is determined such as to form a width corresponding to at least one size of the grid partial surface (1 ... n).

9. The method as claimed in any of the preceding claims, **characterised in that**, when a distance between two test objects (24) is smaller than the size of the measuring spot (36), two or more test objects (24) are combined into one total measurement surface and a grid surface (31) is determined for said total measurement surface, and **in that** an average thickness of the thin layers or an average element concentration is deduced therefrom for any of the individual test objects (24) combined into said total measurement surface.

## Revendications

1. Procédé destiné à mesurer un objet de mesure (24) par fluorescence de rayons X, en particulier destiné à mesurer l'épaisseur de couches fines ou à déterminer une concentration élémentaire d'un objet de mesure (24),
- lors duquel un faisceau primaire (22) provenant d'une source de rayonnement X (21) est dirigé sur l'objet de mesure (24),
- lors duquel un rayonnement secondaire (26) émis par l'objet de mesure (24) est saisi par un détecteur (27) et est acheminé vers un dispositif d'évaluation (29),
- lors duquel le faisceau primaire (22) est déplacé à l'intérieur d'une surface tramée (31), la surface tramée (31) étant divisée en parties de surface tramée (1 ... n) et subdivisée en au moins une rangée (Z1 ... Zn) et au moins une colonne (S1 ... Sn), et un faisceau primaire (22) étant dirigé sur chaque partie de surface tramée (1 ... n), une tache de mesure (36) du faisceau primaire (22) remplissant au moins la partie de surface tramée (1 ... n),
**caractérisé en ce que**
- une étendue latérale de la surface de mesure (25) de l'objet de mesure (24) est saisie,
- l'étendue latérale de la surface de mesure (25) de l'objet de mesure (24) est comparée à la grandeur de la tache de mesure (36) du faisceau primaire (22) qui frappe l'objet de mesure (24),
- lors de la détermination de la grandeur de la surface de mesure (25) de l'objet de mesure (24), laquelle est inférieure à la tache de mesure (36), une grandeur de la surface tramée (31) est sélectionnée de manière à recouvrir au moins la surface de mesure (25) de l'objet de mesure (24),
- à partir d'un rapport entre la grandeur de la surface tramée (31) et la grandeur de la surface de mesure (25) de l'objet de mesure (24) est déterminé un facteur d'échelle a,
- les spectres saisis du rayonnement secondaire (26) en provenance des parties de surface tramée respectives (1 ... n) de la surface tramée (31) sont additionnés, leur moyenne est calculée et est ensuite multipliée par le facteur d'échelle α et
- une fois corrigé par le facteur d'échelle a, le spectre du rayonnement secondaire (26) en provenance des parties de surface tramée respectives (1 ... n) est fourni en vue de l'évaluation quantitative.

2. Procédé selon la revendication 1, **caractérisé en ce que** la grandeur des parties de surface tramée (1 ... n) est déterminée par la grandeur de la tache de mesure (36) du faisceau primaire (22).

3. Procédé selon la revendication 1, **caractérisé en ce que** la grandeur de la surface tramée (31) est formée par un multiple entier de taches de mesure (36) du faisceau primaire (22) disposées en rang directement les unes à la suite des autres ou en se chevauchant les unes les autres.

4. Procédé selon la revendication 1, **caractérisé en ce que** des concentrations élémentaires ou des épaisseurs de couche de l'objet de mesure (24) sont déterminées et sorties au moyen d'un logiciel d'évaluation à partir du spectre des mesures individuelles effectuées au niveau des parties de surface tramée (1 ... n).

5. Procédé selon la revendication 1, **caractérisé en ce qu'**une distance de déplacement de l'objet de mesure (24) par rapport au faisceau primaire (22) qui vient le frapper, depuis l'une quelconque partie de surface tramée (2 ... n + 1) vers la partie de surface tramée voisine, et ce à l'intérieur d'une rangée ou d'une colonne de la surface tramée (31), est déterminée par la grandeur de la tache de mesure (36) d'un faisceau primaire (22) provenant de la source de rayonnement (21).

6. Procédé selon la revendication 1, **caractérisé en ce qu'**une grandeur de la surface de mesure (25) de l'objet de mesure (24) est déterminée par un procédé de mesure optique.

7. Procédé selon la revendication 6, **caractérisé en ce que** la grandeur de la surface tramée (31) est conçue de manière à être supérieure à la surface de mesure déterminée (25) de l'objet de mesure (24) et est déterminée pour être supérieure de manière telle que la surface tramée (31) comprend la surface de mesure déterminée (25) ainsi qu'un bord (35) qui entoure au moins partiellement cette dernière.

8. Procédé selon la revendication 7, **caractérisé en ce que** le bord (35) qui entoure la surface de mesure (25) de l'objet de mesure (24) est déterminé de manière à faire une largeur qui correspond au moins à une grandeur de la partie de surface tramée (1 ... n) .

9. Procédé selon l'une quelconque des revendications précédentes, **caractérisé en ce que** lorsqu'une distance entre deux objets de mesure (24) est inférieure à la grandeur de la tache de mesure (36), deux ou plusieurs objets de mesure (24) sont réunis en vue de former une surface de mesure totale, et **en ce que** pour ladite surface de mesure totale est déterminée une surface tramée (31) et qu'à partir de celle-ci est déduite une épaisseur moyenne des couches minces ou une concentration élémentaire moyenne pour chaque objet de mesure (24) réuni dans la surface de mesure totale.
